Europäisches Patentamt

European Patent Office

Office européen des brevets

(11) Publication number: **0 358 798**
**A1**

## EUROPEAN PATENT APPLICATION

(21) Application number: 88115076.7

(22) Date of filing: 15.09.88

(51) Int. Cl.⁵: **C08J 3/20** , **B29B 7/90** , **B29B 9/16** , **C08K 7/04**

(43) Date of publication of application:
**21.03.90 Bulletin 90/12**

(84) Designated Contracting States:
**DE FR GB**

(71) Applicant: **SHOWA DENKO KABUSHIKI KAISHA**
**10-12, Shiba Daimon 2-chome Minato-ku Tokyo(JP)**

(72) Inventor: **Iwasaki, Kunio SHOWA DENKO K.K. OITA RESEARCH**
**2, Oaza Nakanosu**
**Oita-shi Oita(JP)**
Inventor: **Nakagami, Sakuyoshi SHOWA DENKO K.K. OITA RESEARCH**
**2, Oaza Nakanosu**
**Oita-shi Oita(JP)**
Inventor: **Fukujama, Yukio SHOWA DENKO K.K. OITA RESEARCH**
**2, Oaza Nakanosu**
**Oita-shi Oita(JP)**

(74) Representative: **Patentanwaltsbüro Cohausz & Florack**
**Postfach 14 01 20 Schumannstrasse 97**
**D-4000 Düsseldorf 1(DE)**

(54) Composite particle comprising resin particle and fibers and method of producing same.

(57) A composite particle comprises a synthetic resin particle and a large number of fine inorganic fibers adhering to the surface of the resin particle. The composite particle has a particle size of 10 μm to 10 mm and is used as the material for an FRP article.

*Fig. 3*

EP 0 358 798 A1

# COMPOSITE PARTICLE COMPRISING RESIN PARTICLE AND FIBERS AND METHOD OF PRODUCING SAME

## BACKGROUND OF THE INVENTION

### Field of the Invention

The present invention relates to composite particles comprising resin particles and fine inorganic fibers adhering to each of the resin particles. The composite particles are used as a raw material of a plastic article formed by an extruder, an injection machine, a compression molding machine, or the like.

### Description of the Related Art

Polymeric composites including a fiber reinforcement, i.e., fiber reinforced plastics (FRP's), are grouped into two categories. In the first category, filaments or staple fibers are formed into a sheet, such as a woven cloth and a nonwoven cloth, the sheet is impregnated with a thermoset resin, and the resin is cured in a mold to form an FRP article. In the second category, staple fibers or short fibers are mixed with a thermoplastic resin or thermoset resin oligomer or prepolymer, and the mixed material is molded into an FRP article by an extruder, injection machine, compression molding machine, or the like.

In the latter case, the staple fibers and short fibers used in the polymeric composites are usually linear fibers having a diameter of several micro-meters, and are not interwound. An agent is applied or impregnated in these fibers, for collecting individual fibers to improve the fiber transportability and to prevent fraying of the collected fibers and thus improve the moldability of the resin containing the fibers. The application of the collecting agent to short fibers, in particular, considerably increases the bulk density (i.e., volume per unit weight). In this case, when a mixture of the short fibers and a thermoplastic or thermoset resin is fed into an extruder or injection machine provided with a screw, the stability of the feeding is substantially improved.

Recently, fine inorganic fibers, which are similar to whiskers having a very small fiber diameter and interwound to form a mat or web, have been produced. An example of one kind of these fine inorganic fibers is that of vapor grown carbon fibers, which are grown in a floating state within a reaction furnace by a chemical vapor deposition method, and the resultant carbon fibers have a diameter of from 0.1 to 2.0 $\mu$m.

The fine inorganic fibers have multifarious dimensions, are lumpy, and have a small bulk density, due to the floating growth procedure within the reaction furnace. Accordingly these fine fibers are not easily transported and cannot be fed stably into the mixing or molding machine. Since there is a large difference between the bulk densities of the fine fibers and that of the resin, the mixing effects of the screw upon the mixture of the fine fibers and the resin are poor, and thus a molded article having fine fibers uniformly dispersed therein can not be produced.

To eliminated these disadvantages, for example, a mat lump of the fine carbon fibers is shattered by a mill or the like, has an agent (e.g., water or liquid resin) added thereto for collecting the shattered fibers, and is granulated by a mixer, whereby the bulk density of the fiber is increased. The obtained fiber granules can be transported, and can be fed into the extruder with or without resin.

Nevertheless, the above-mentioned process has a disadvantage in that the number of steps of shattering, adding the collecting agent, granulation, mixing, and drying is increased, depending on the circumstances. Moreover, the liquid collecting agent must have a good compatibility with the main resin used for the polymeric composite articles. In particular, since a thermoplastic resin having a solid state at an ordinary temperature and being somewhat soluble in a collecting agent has a poor impregnation property, a suitable liquid fiber collecting agent must be selected.

## SUMMARY OF THE INVENTION

An object of the present invention is to provide a method of producing a composite particle for a raw material of an FRP article without using an agent for collecting fine inorganic fibers, which composite particle comprises a synthetic resin particle and fine inorganic fibers, in particular, having a lump shape of whisker inorganic fibers interwound with each other.

Another object of the present invention is to provide composite particles comprising the resin particles and the fine inorganic fibers, which particles are easily handled, are fed stably into an extruder or an injection machine, and contribute to an uniform dispersion of the fibers within an molded article, (i.e. an FRP article).

The present inventors carried out various research projects in an effort to realize the above mentioned objects, and found that a resin particle and fine inorganic fibers can be mixed by using a high speed intensive mixer having agitating blades which rotate at a high speed under a heating condition, and consequently, the inorganic fibers adhere to the surface of resin particles and the bulk density of composite particles is increased, and that when the obtained composite particles are used for forming an FRP article, stability of the feeding is substantially improved and a uniform distribution of the fibers within the article is attained.

Preferably, the composite particle has a particle size of from 10 $\mu$m to 10 mm and a bulk density of from 0.3 to 1.0 g/cm$^3$. Taking the desired properties of a FRP article into consideration, the composite particle preferably has a particle size of from 100 $\mu$m to 5 mm and a bulk density of from 0.35 to 0.7 g/cm$^3$.

## BRIEF DESCRIPTION OF THE DRAWINGS

The present invention will become more apparent from the description of the preferred embodiments set forth below with reference to the accompanying drawings, in which:

Fig. 1 is a scanning electron micrograph of a composite particle according to the present invention;

Fig. 2 is a scanning electron micrograph of a section of the composite particle of Fig. 1; and

Fig. 3 is a scanning electron micrograph of a portion of a surface of the composite particle of Fig. 1.

## DESCRIPTION OF THE PREFERRED EMBODIMENTS

A composite particle according to the present invention comprises a resin particle and fine inorganic fibers adhering to the surface of the resin particle.

The inorganic fibers of the composite articles according to the present invention are carbon fibers produced by a vapor phase growth method, silicon carbide whiskers, potassium titanate fibers, magnesium sulfate fibers, calcium sulfate whiskers or alumina fibers. When the inorganic fibers are prepared for producing the composite particle, the fibers are interwound to form a mat (or web) lump.

Preferably, the inorganic fibers have a fiber diameter of from 0.1 to 2 $\mu$m, and a fiber length of from 1.0 $\mu$m to 10 mm, and the carbon fiber and silicon carbide (whisker) fibers have a fiber diameter of from 0.1 to 2 $\mu$m, and a fiber length of from 1 $\mu$m to 1.0 mm. The inorganic fibers are produced by suitable conventional crystal growth methods, e.g., a chemical vapor deposition (growth) method.

The resin particle has a shape of a granule, a flake or a pellet and is produced by suitable conventional methods, using a granulator, a pelletizing machine or the like. Note, it is possible to make resin particles having a desired particle size distribution by shattering a large size granules or pellets. Preferably, the resin particle has a particle size of from 10 $\mu$m to 10 mm, especially from 100 $\mu$m to 5 mm. Taking the effects of fibers in an FRP structure into consideration, a resin portion having a particle size of 10 mm or more will invalidate the effects of fiber addition. There is no lower limit to the resin particle size, but a lower limit of 10 $\mu$m is suitable, in that the powder handling of particles less than 10 $\mu$m in size is difficult. Where the adhered quantity of the fiber is relatively small, there is little difference between the composite particle size and the resin particle size, but where the adhered quantity is relatively large, the resin particle size becomes smaller than the composite particle size.

The resin particle material is thermoplastic resin or thermoset resin used for forming molded articles. The thermoplastic resin is at least one selected from the group consisting of polyethylene, polypropylene, polystyrene, polymethylmethacrylate, polyvinylchloride, polyvinyl acetate, cellulose acetate, polyamide, polyacrylonitrile, polycarbonate, polyphenyleneoxide, polyketone, polysulfone, polyphenylene sulfide, polyimide, and fluoroplastic. The thermoset resin is in an oligomer state or a prepolymer state, and is at least one selected from the group consisting of phenolic resin, epoxy resin, and diallylphthalate resin.

Preferably, the fine inorganic fibers are in amount of from 1 to 60% by weight of the total weight of the composite particle. The fine fibers of up to 60 wt% can be adhered to the surface of the resin particle, but fine fibers of less than 1 wt% do not substantially improve the properties (e.g., mechanical strength, heat resistance) of a molded (FRP) article.

In the production method according to the present invention, the fine inorganic fibers and the resin

3

particles are charged into a high speed intensive mixer (e.g., a Henschel mixer comprising a mixing vessel with agitating blades and a jacket through which steam or hot oil flows). The inside of the mixer is heated, the agitating blades rotate at a high circumferential velocity of from 10 to 65 m/sec, so that frictional heat is generated between the charged material (i.e., fibers and resin particles) and the agitating blades, between the charged material and a vessel wall, and between the resin particles, to raise the temperature of the charged material. As a result, the surface of the resin particle is softened or partially melted and the fibers adhere to the softened or melted surface. Where a thermoplastic resin is used as the resin particle, the temperature of the resin particle surface is raised within a range of from a softening point to a melting point of the thermoplastic resin used. Where an oligomer or prepolymer of the thermoset resin is used as the resin particle, the temperature of the resin particle surface is raised to soften the surface. At this mixing step, depending on the surface temperature, some resin particles often fuse with each other into one body, in which the fine fibers are caught at the fusing interface, and on which the fine fibers adhere. In this case, since the obtained composite particle comprises several resin particles, the particle size and bulk density thereof are increased. An amount of the fine fibers trapped within the composite particle is less than 20% of the total fine fibers. Namely the major part of the fine fibers (80% or more) lies on and adheres to the surface of the composite particle.

The inside of the mixer is heated to assist the adherence of the fibers, control the mixing conditions, and increase the efficiency of the mixing process. For example, it is possible to raise the inside temperature of a mixer to a temperature approaching the melting point of a thermoplastic resin used by passing steam through a jacket surrounding a mixing vessel of the mixer.

Where a rate of stirring of the mixer is too slow, the adherence of the fibers is poor, and if the rate of stirring becomes too fast, problems occur in the mixer itself. Thus, preferably a circumferential velocity of the rotating blades of the mixer is within a range of from 10 to 65 m/sec.

Preferably, the fine inorganic fibers are subjected to a conventional surface-treatment before being charged into a mixer. For example, a coupling agent is applied to the fibers.

It is possible to further charge an additive, such as stabilizer, plasticizer, antioxidant, antistatic agent and colorant, into a mixer together with the fine fibers and resin particles.

According to the present invention, fine fibers adhere to a regin particle in only one step of mixing, without using a collecting agent, which reduces production costs, compared with a conventional method. The produced composite particles can be easy handled in the same way that the resin particles only are handled, and can be fed stably into an extruder or injection machine and the fine fibers can be thoroughly mixed with resin and dispersed uniformly in the resin matrix by the mixing action of the screw, since the fine fibers are not lumpy. That is, the composite particles contribute to a uniform distribution of the fine fibers in a composite plastic article.

Examples 1 to 4

Carbon fibers were prepared by a chemical vapor growth method proposed in Japanese Examined Patent Publication (Kokoku) No. 62-242. A raw liquid benzene in which 2 wt% of ferrocene was dissolved was fed into a furnace tube having an inside diameter of 105 mm and heated at 1100°C by using a hydrogen carrier gas. The feed rate of the liquid was 8 g/min and the flow rate of the hydrogen gas was 25 l/min. A growth of 240 g of carbon fibers occurred in the stream, and these fibers were deposited within the furnace tube for a reaction period (i.e., operating period) of one hour.

The obtained carbon fibers had a fiber diameter of 0.1 to 2 μm and a fiber length of 1 μm to 1 mm, and were interwound to form mat (or web) lumps. Consequently, the fibers had a bulk density (volume per unit weight) of 0.048 g/cm$^3$, without compression.

Resin particles of polypropylene (Sho-allomer SMA410, trade name of Showa Denko Kabushiki Kaisha) having a particle size of 10 μm to 1.0 mm (particles having a particle size of 300 to 600 μm comprising 70 to 80% of the total particles) were used.

An amount of 900 g of the fibers and 2100 g of the resin particles was charged into a Super-mixer 20 l mixing vessel (trade name of Kabushiki Kaisha Kuwata Seisakusho, and a type of Henschel mixer). The inside of the mixer was heated by passing steam through a jacket surrounding the mixing vessel at approximately 120°C, and the agitating blades of the mixer were rotated at a circumferential velocity of the blades of 40 m/sec for 20 or 30 minutes, to mix the fibers and resin particles. During the mixing, the inside temperature of the mixing vessel was raised to 150, 155, 160, and 170°C, respectively.

As a result of the mixing, composite particles according to the present invention were produced. One of the composite particles obtained in Example 1 and having a length in the longer direction of approximately

4

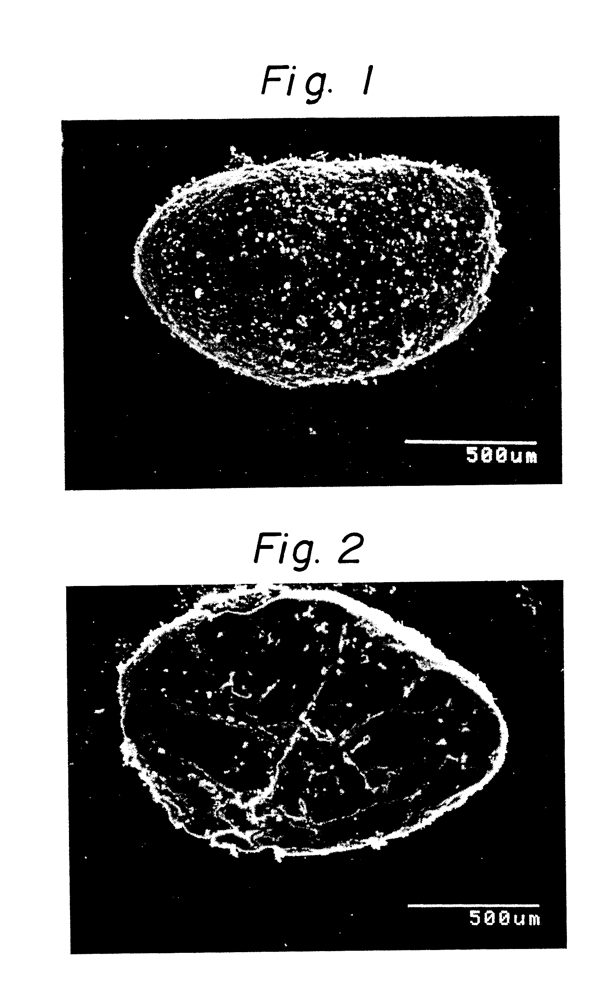

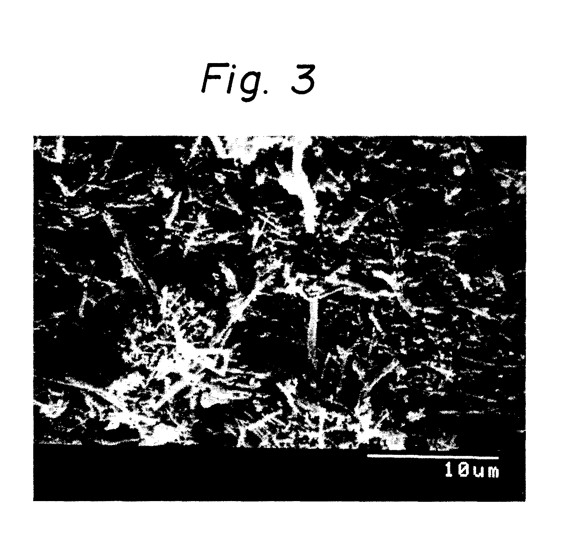

1.5 mm is shown in Figs. 1 to 3. Figures 1 and 2 are scanning electron micrographs (x 60) illustrating a surface and a cross section of the composite particle, and Fig. 3 is a scanning electron micrograph (x 300) illustrating fibers at the surface of the composite particle. As can be seen from Fig. 1, fine carbon fibers are adhered to the resin surface by the resin adhesive action, and some carbon fibers are cohered into fine granules adhering to the resin surface. The carbon fibers are very fine and overlap along the surface of the resin, as shown in Fig. 3. As can be seen from Fig. 2, the composite particle comprises several resin particles fused with each other into one body, and includes carbon fibers at the resin particle interface. In this case, the resin particles were fused, but a composite particle comprising only one resin particle and fine carbon fibers can be obtained.

The data of the composite particles obtained in Examples 1 to 4 is shown in Table 1.

The obtained composite particles were charged into a conventional pelletizer extruder. The particles could be fed stably into the screw, and due to the stable feeding, the screw extruded uniform strands without breakage or damage, to be cut into pellets. The fine fibers were uniformly distributed in the extruded pellets.

TABLE 1

| | FIBER CONTENT (wt%) | TEMPERATURE IN MIXER (½ C) | MIXING TIME (Min.) | SHAPE OF COMPOSITE PARTICLE | PARTICLE SIZE (mm) | BULK DENSITY OF PELLETS (g/cm$^3$) | EXTRACTION |
|---|---|---|---|---|---|---|---|
| EXAMPLE 1 | 30 | 150 | 20 | GRANULE | 0.01 - 3 | 0.353 | |
| EXAMPLE 2 | 30 | 155 | 20 | " | 0.01 - 3 | 0.38 | STABLE |
| EXAMPLE 3 | 30 | 160 | 20 | " | 0.01 - 3 | 0.44 | FEEDING |
| EXAMPLE 4 | 60 | 170 | 30 | " | 0.01 - 10 | 0.70 | CONTINUOUS |
| EXAMPLE 5 | 30 | 100 | 15 | " | 0.01 - 3 | 0.40 | EXTRUSION |
| EXAMPLE 6 | 30 | 160 | 20 | " | 0.01 - 3 | 0.49 | WITHOUT |
| EXAMPLE 7 | 30 | 155 | 20 | " | 0.01 - 3 | 0.53 | BREAKAGE |
| EXAMPLE 8 | 30 | 155 | 20 | " | 0.01 - 3 | 0.50 | |
| EXAMPLE 9 | 30 | 160 | 20 | " | 0.01 - 3 | 0.42 | |

EP 0 358 798 A1

EXAMPLE 5

The carbon fibers (900 g) of Examples 1 to 4 and flaky resin particles of epoxy prepolymer (ECN1299: trade name of Chiba-Geigy Kabushiki Kaisha, of 2100 g) were charged into the Super-mixer used in Examples 1 to 4, the jacket was heated to $80\frac{1}{2}$ C by steam, and the agitating blades were rotated at a circumferential velocity of 40 m/sec for 15 minutes. During the mixing, the inside temperature was raised to $100\frac{1}{2}$ C. As a result of the mixing, composite particles according to the present invention were obtained, and the data thereof is shown in Table 1.

EXAMPLE 6

Silicon carbide whisker fibers having a diameter of 0.1 to 1.0 $\mu$m, a length of 50 to 200 $\mu$m, and a bulk density of 0.1 g/cm³ (Tokawhisker: trade name of Tokai Carbon Kabushiki Kaisha) were used. The whisker fibers (900 g) and the polypropylene particles of Examples 1 to 4 (2100 g) were charged into the Super-mixer used in Examples 1 to 4, the jacket was heated to $120\frac{1}{2}$ C by steam, and the agitating blades were rotated at a circumferential velocity of 40 m/sec for 20 minutes. During the mixing, the inside temperature was raised to $160\frac{1}{2}$ C. As a result of the mixing, composite particles according to the present invention were obtained, and the data thereof is shown in Table 1.

EXAMPLE 7

Potassium titanate whisker fibers having a diameter of 0.2 to 0.5 $\mu$m, a length of 10 to 20 $\mu$m, and a bulk density of 0.18 g/cm³ ($K_2O \cdot 6TiO_2$ , $K_2O \cdot 6TiO_2 \cdot 1/2H_2O$; Tismo: trade name of Otsuka Kagaku Yakuhin Kabushiki Kaisha) were used. The whisker fibers and the polypropylene particles of Examples 1 to 4 were charged into the Super-mixer used in Examples 1 to 4, the jacket was heated by steam, and the agitating blades were rotated at a circumferential velocity of 40 m/sec for 20 minutes. During the mixing, the inside temperature was raised to $155\frac{1}{2}$ C. As a result of the mixing, composite particles according to the present invention were obtained, and the data thereof is shown in Table 1.

EXAMPLE 8

Calcium sulfate whisker fibers having an average diameter of 2 $\mu$m, a length of 50 to 60 $\mu$m, and a bulk density of 0.19 g/cm³ ($CaSO_4$ , $CaSO_4 \cdot 1/2H_2O$; Franklin Fiber: trade name of U.S. Gypum Co.) were used. The whisker fibers and the polypropylene particles of Examples 1 to 4 were charged into the Super-mixer used in Examples 1 to 4, the jacket was heated by steam, and the agitating blades were rotated at a circumferential velocity of 40 m/sec for 20 minutes. During the mixing, the inside temperature was raised to $155\frac{1}{2}$ C. As a result of the mixing, composite particles according to the present invention were obtained, and the data thereof is shown in Table 1.

EXAMPLE 9

Alumina fibers having a diameter of 3 $\mu$m, a cut length of 5 mm, and a bulk density of 0.1 g/cm³ (95% $Al_2O_3$ and 5% $SiO_2$; Saffil: trade name of ICI Co.) were used. The fibers and the polypropylene particles of Examples 1 to 4 were charged into the Super-mixer used in Examples 1 to 4, the jacket was heated by steam, and the agitating blades were rotated at a circumferential velocity of 40 m/sec for 20 minutes. During the mixing, the inside temperature was raised to $16\frac{1}{2}$ C. As a result of the mixing, composite particles according to the present invention were obtained, and the data thereof is shown in Table 1.

EXAMPLE 10

7

The composite particles obtained in Example 1 were used as an injection molding material in a screw injection machine. The composite particles were charged in a hopper of the injection machine and were injected into a mold by revolution of the screw. The stability of the feeding of the material by the screw was excellent, and no problem was caused by a bridging of charged material within the hopper, which gave very stable molding characteristics. Thus a molded article having a good dispersion of fibers therethrough, and superior mechanical strength properties was obtained.

The composite particles obtained in Examples 5 to 10 were extruded by the pelletizer extruder used in Examples 1 to 4. The particles could be fed stably into the screw, and as a result, the screw extruded uniform strands without breakage or damage, to be cut into pellets. The fine fibers were uniformly distributed in the extruded pellets.

COMPARATIVE EXAMPLE

The carbon fibers and polypropylene particles of Examples 1 to 4 were prepared and were dry-blended, and the blended material was then charged into the conventional pelletizer extruder used in Examples 1 to 4 to form pellets. In this case, bridging of the fed material at the bottom of a hopper of the pelletizer extruder often occurred, and as a result, surging occurred in the extruder. The obtained pellets had an insufficient (nonuniform) dispersion of fibers therethrough, and thus, to make the dispersion of fibers, uniform, the obtained pellets were twice recharged into the same pelletizer extruder.

Thereafter, the obtained pellets were charged into the screw injection machine used in Example 10 and were injected to form a molded article. The obtained article had lower mechanical strength properties due to the thermal histories thereof, and could not be formed into suitable pellets.

It will be obvious that the present invention is not restricted to the above-mentioned embodiments and that many variations are possible for persons skilled in the art without departing from the scope of the invention.

**Claims**

1. A composite particle comprising a synthetic resin particle and a large number of fine inorganic fibers adhering to a surface of said resin particle.

2. A composite particle according to claim 1, wherein said composite particle has a particle size of from 10 $\mu$m to 10 mm and a bulk density of from 0.3 to 1.0 g/cm$^3$.

3. A composite particle according to claim 2, wherein said composite particle has a particle size of from 100 $\mu$m to 5 mm and a bulk density of from 0.35 to 0.7 g/cm$^3$.

4. A composite particle according to claim 1, wherein said resin particle comprises several resin particles which fuse to form one body including the fine fibers at a fused interface.

5. A composite particle according to claim 1, wherein said inorganic fibers are carbon fibers produced by one of a vapor phase growth method, silicon carbide whisker fibers, potassium titanate fibers, magnesium sulfate fibers, calcium sulfate whisker fibers, and alumina fibers.

6. A composite particle according to claim 1, wherein said inorganic fibers have a fiber diameter of from 0.1 to 2 $\mu$m, and a fiber length of from 1.0 $\mu$m to 10 mm.

7. A composite particle according to claim 1, wherein said resin particle is a granule having a particle size of from 10 $\mu$m to 10 mm.

8. A composite particle according to claim 1, wherein said resin particle is a flake.

9. A composite particle according to claim 1, wherein said resin particle is a pellet.

10. A composite particle according to claim 1, wherein said synthetic resin particle is formed of a thermoplastic resin.

11. A composite particle according to claim 10, wherein said thermoplastic resin is at least one selected from the group consisting of polyethylene, polypropylene, polystyrene, polymethylmethacrylate, polyvinylchloride, polyvinyl acetate, cellulose acetate, polyamide, polyacrylonitrile, polycarbonate, polyphenyleneoxide, polyketone, polysulfone, polyphenylene sulfide, polyimide and fluoroplastic.

12. A composite particle according to claim 1, wherein said synthetic resin particle is formed of an oligomer or prepolymer thermoset resin.

13. A composite particle according to claim 12, wherein said thermoset resin is at least one selected from the group consisting of phenolic resin, epoxy resin, and diallylphthalate resin.

14. A composite particle according to claim 1, wherein said inorganic fibers are contained in an amount of 1 to 60% by weight of a total weight of said composite particle.

15. A method of producing a composite particle consisting of a synthetic resin particle and fine inorganic fibers, comprising a step of mixing said fine inorganic fibers and said synthetic resin particle in a mixer in which said fibers and resin particle are heated, agitating blades of said mixer rotating at a high speed, so that said fine inorganic fibers adhere to the surface of said synthetic resin particle.

16. A method according to claim 15, wherein a circumferential velocity of said rotating blades is from 10 to 65 m/sec.

17. A method according to claim 15, wherein said synthetic resin particle is formed of a thermoplastic resin, and said fibers and said resin particle are heated so that a surface of said resin particle has a temperature of from a softening point of to a melting point of said thermoplastic resin.

18. A method according to claim 15, wherein said synthetic resin particle is formed of an oligomer or prepolymer thermoset resin, and said fibers and said resin particle are heated to a temperature at which the resin particle surface is softened.

9

## Fig. 1

500um

## Fig. 2

500um

## Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 011 240 (BASF)<br>* Claims; page 1, lines 5-20; page 2, line 6 - page 3, line 7; page 3, line 34 - page 4, line 25; page 5, line 21 - page 6, line 3; examples * | 1-3,5-11,14,15,17 | C 08 J 3/20<br>B 29 B 7/90<br>B 29 B 9/16<br>C 08 K 7/04 |
| Y | | 15-18 | |
| Y | GB-A-1 447 304 (NISSAN KAGAKU KOGYO K.K.)<br>* Claims; examples * | 15-18 | |
| Y | GB-A-1 331 310 (COSDEN OIL & CHEMICAL CO.)<br>* Claims * | 15-18 | |
| X | US-A-4 722 943 (G.E. MELBER et al.)<br>* Claims; figure 1 * | 1 | |
| Y | FR-A-2 160 434 (WEDCO)<br>* Claims; page 5, line 10 - page 7, line 20 * | 15-18 | |

TECHNICAL FIELDS SEARCHED (Int. Cl.4)

C 08 J
B 29 B
C 08 K

The present search report has been drawn up for all claims

| Place of search | Date of completion of the search | Examiner |
|---|---|---|
| THE HAGUE | 09-05-1989 | HALLEMEESCH A.D. |